# EUROPEAN PATENT SPECIFICATION

(11) **EP 3 064 926 B1**
(45) Date of publication and mention of the grant of the patent: **28.03.2018**
(21) Application number: 15382100.4
(22) Date of filing: 06.03.2015
(51) Int. Cl.: G01N 11/14

(54) **Rotational viscometer and equipment for determining the viscosity comprising said viscometer**
Rotationsviskosimeter und Vorrichtung zur Bestimmung der Viskosität mit diesem Viskosimeter
Viscosimètre rotatif et équipement permettant de déterminer la viscosité comprenant ce viscosimètre dynamique

(43) Date of publication of application: 07.09.2016
(73) Proprietor: Buira Nunez, Ernest, 08021 Barcelona (ES)
(72) Inventor: Buira Núñez, Ernest, 08980 Sant Feliu de Llobregat (ES)
(74) Representative: Oficina Ponti, SLP

(56) References cited:
- US-A1- 2008 173 075
- US-A1- 2012 210 774
- US-A1- 2013 160 528
- US-B1- 6 776 028
- Walter Herzog: "Automated Multi-Range Viscometer", , 31 December 2007 (2007-12-31), XP055364243, US Retrieved from the Internet: URL:http://www.integsci.com/uploads/files/ hvm-472.pdf [retrieved on 2017-04-12]

## Description

The present invention relates to a rotational viscometer comprising a measuring head associated with a spindle to be immersed in a fluid sample, and to an equipment for determining the viscosity comprising said viscometer.

### Background to the invention

Kinematic viscosity is measured by determining the tangential force required to displace particles in material with a specific deformation velocity. The viscosity is obtained as a result of the relationship between tangential force and shear deformation, the measuring unit being the CentiPoise (cP).

Rotational viscometers are instruments that function by means of a rotating shaft to which is attached a spindle that is immersed in the fluid sample to be analysed. The viscometer measures the resistance torque produced on rotation by a spring installed inside the measuring head. The resulting resistance or torque is the measurement of the viscosity flow and depends on the spindle's rotation speed and the type of spindle used.

The rotational viscometers that exist on the market, such as the rotational viscometer described in US 2012/0210774 A1, include a screen and keyboard integrated in the measuring head, so that the user can enter parameters and view the results. In these instruments, the same measuring head is equipped with various types of spindles able to work at different speeds. However, these viscometers have the inconvenience that the spring inside the head is configured for a single measurement range; low range (20-2,000,000 cP), medium range (100-13,000,000 cP) or high range (200-106,000,000 cP), meaning that the same device cannot measure all viscosity ranges.

Another inconvenience presented by existing rotational viscometers is the need to have an additional measuring accessory for non-flowing fluid samples (for example, cosmetic creams). These fluids require the use of a spindle that moves vertically while measuring in order to avoid cavitation.

### Description of the invention

The objective of the present invention is to provide a rotational viscometer that overcomes the aforementioned inconveniences and has the advantages described below.

In accordance with this objective, according to a first aspect, the present invention provides a rotational viscometer according to independent claim 1. The present invention is a viscometer with a compact measuring unit equipped with a processing module that can be controlled from a graphic interface on a remote terminal. It is thus obtained an instrument that allows readings to be taken with ease, without being in front of the measuring head. In addition, the graphic interface on the remote terminal can be adapted to suit current tablet- or smartphone-based working platforms. This unit also has the advantage that it can be interchangeably coupled from and decoupled from a framework. The compact unit comprises a wireless communication module adapted to receive and/or transmit radiofrequency signals from a smart, mobile remote terminal (for example a tablet or smartphone). Advantageously, said wireless communication module is a Bluetooth communication module.

In a preferred embodiment, the processing module of the compact viscometer's measuring unit provides a control signal in order to take a measurement based on a signal from the remote terminal indicating: a spindle for a pre-set viscosity range, a rotation speed for the spindle and/ or a sample fluid density value.

Preferably, said compact unit is mounted vertically and movably on a framework provided with moving means. Advantageously, said framework includes a control unit comprising:
a. a wired or wireless communication unit adapted to receive and/or transmit signals from the remote terminal, and
b. a processing module associated with said wired or wireless communication module to provide a control signal to a drive motor for driving said moving means based on a signal from the remote terminal.

The user can thus control the movement of the head or compact unit from the remote terminal to remotely change the head height or activate the appropriate motor operating mode to measure non-flowing fluid samples (for example, cosmetic creams).

Experts on the subject will be aware that, in order to avoid cavitation in non-flowing fluids of this type, the measurement must be taken with the spindle performing an alternating movement defining an elliptical path that avoids cavitation of the fluid. The present invention allows measurements of this type to be performed without the need for additional accessories. In a preferred embodiment, the vertical moving means comprise a pair of endless belts vertically arranged on vertical structures on the framework and a pair of securing pieces for securing the head or compact unit, said pieces being integrally attached to each belt in order to vertically move the head or unit between the two vertical structures. Thus the head or compact unit can be very stably and safely moved from the remote terminal.

In accordance with a second aspect, the present invention provides an equipment for determining the viscosity of a fluid sample using a viscometer as defined in claims 1 to 7, comprising a plurality of compact measuring units, each one of said compact units comprising a measuring head of a pre-set viscosity range (high, medium or low), each of said compact units being susceptible of being controlled from the same remote terminal and interchangeably coupled from and decoupled from the same framework in order to measure a different viscosity range using the same equipment.

Thanks to these features, an instrument is obtained that allows a full range of viscosities to be determined using a single equipment, by quickly and easily changing only one compact measuring unit for another that is immediately recognised by the remote terminal that forms a part of the equipment. This remote terminal may be, for example, a smart mobile remote terminal, tablet or smartphone, equipped with a communication module, preferably wireless, to receive and/or transmit signals to said plurality of compact measuring units, said remote terminal including a graphic user interface.

### Brief description of the drawings

To assist understanding the above, drawings are provided that schematically, illustratively and non-restrictively represent an embodiment of the invention.
Figure 1 is a view of a viscometer comprising a measuring head or compact measuring unit mounted on a framework with vertical moving means.
Figure 2 is an exploded view of the viscometer in figure 1.
Figure 3 shows a view of the vertical structures supporting the endless belts and the drive motor for said belts.
Figure 4 shows a cross section of figure 3.
Figure 5 shows three compact measuring units forming part of the measuring equipment of the present invention. Each of these compact units measures viscosity within a set range (high, medium, low).
Figure 6 is a perspective view of a viscometer comprising a compact measuring unit mounted on a conventional foot.

### Description of a preferred embodiment

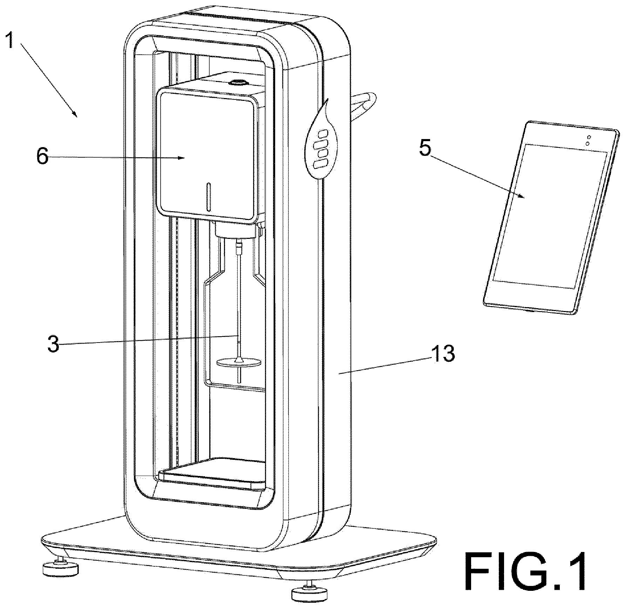

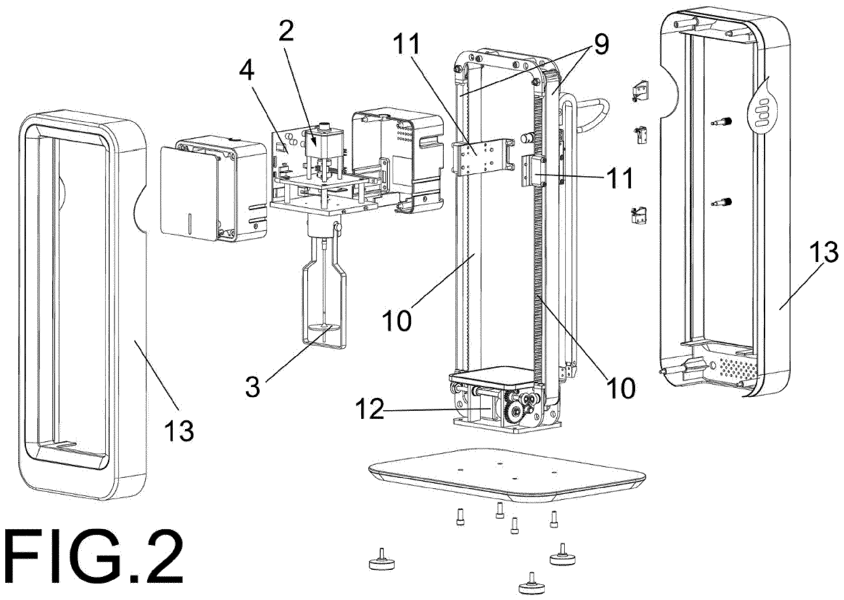

Below is a description of the viscometer and viscosity measuring device constituting the invention with reference to figures 1 to 6.

The rotational viscometer 1 claimed comprises a measuring head 2 associated with a spindle 3 to be immersed in a fluid sample and a control unit 4 comprising:
a. a wireless communication module adapted to receive and/or transmit radiofrequency signals from a remote user terminal 5, and
b. a processing module associated with the wireless communication module to provide a control signal to the measuring head 2 based on a signal sent from a graphic interface on the remote terminal 5.

The control unit 4 is integrated in the measuring head 2 in such a way that together with said head 2 it forms a compact unit 6 that can be controlled from said remote terminal 5.

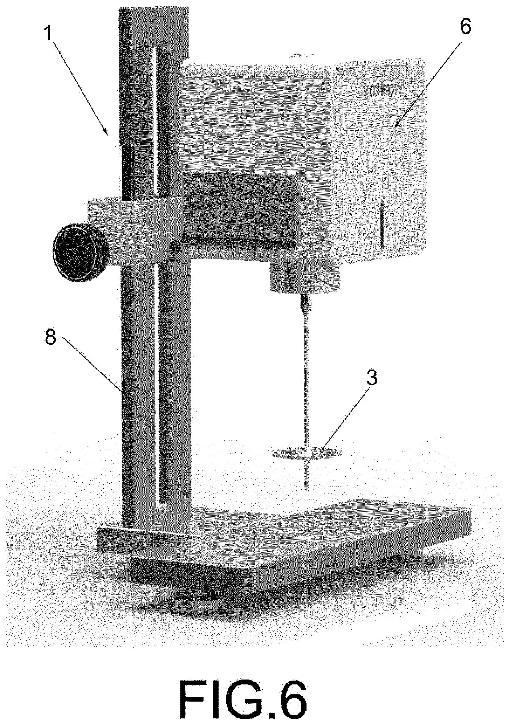

Figure 1 shows a viscometer with a compact measuring unit 6 mounted detachably on a framework 7 that includes moving means to vertically move said compact unit 6. Figure 6 shows the same compact unit 6, but in this case arranged on a conventional foot. In both cases, the compact measuring unit 6 is controlled from a remote terminal 5 that may be, for example, a smart mobile terminal such as a tablet with a Bluetooth module (see representation of the terminal in figure 1). As discussed in the description of the invention, it is thus obtained an instrument that allows readings to be taken with ease, without the user being in front of the measuring head.

Signals indicating the selected spindle 3, spindle 3 rotation speed and/or a fluid density value can be sent to the control unit 4 of the compact unit 6 by the remote terminal 5. These signals are necessary in order for the head 2 to perform a simple viscosity measurement. The same remote terminal 5 can send signals indicating maximum and minimum limits for viscosity values that can be associated with an alarm that will sound on the remote terminal 5 itself.

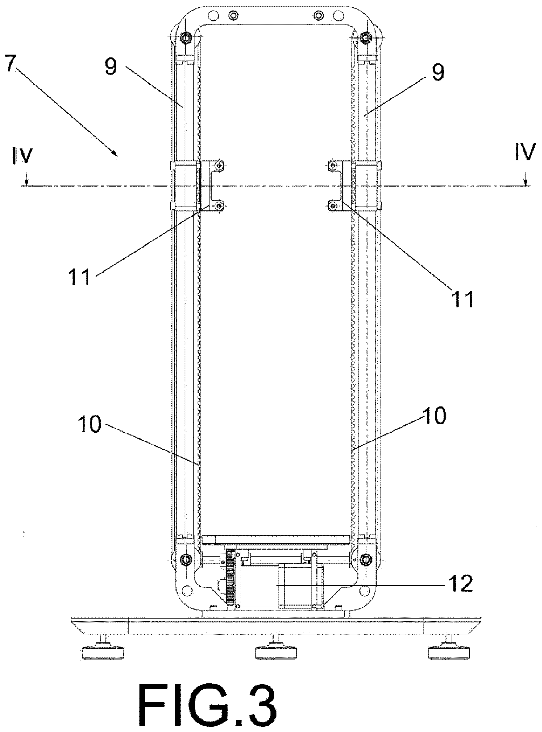

Figure 3 shows an exploded view of the viscometer 1 in figure 1, including the framework 7, which incorporates moving means to vertically move the measuring head 2 associated with the spindle 3. As can be seen in figure 3, the framework 7 is enclosed within a protective casing 13 and the measuring head 2 is located inside the compact measuring unit 6.

In order to vertically move the measuring head 2, vertical structures 9 supporting endless belts 10 are integrally attached to securing pieces 11 for securing the compact unit 6. The belts 10 are actuated and moved by a motor 12 associated with a control unit on the framework 7 that includes a second wireless communication module to receive and/or transmit signals from the remote terminal 5.

The user can thus control the movement of the measuring head 2 from the remote terminal 5 in order to remotely change the head height or to activate the appropriate operating mode to measure non-flowing fluids (for example, cosmetic creams).

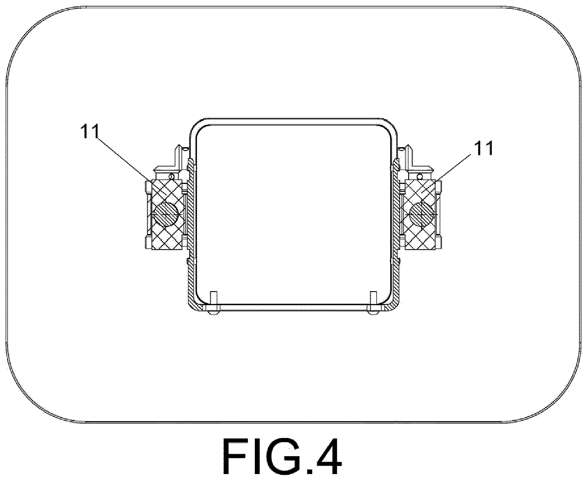

Figures 3 and 4 show two further views of the vertical structures 9 on which the endless belts 10 and pieces 11 for securing the compact measuring unit 6 are mounted.

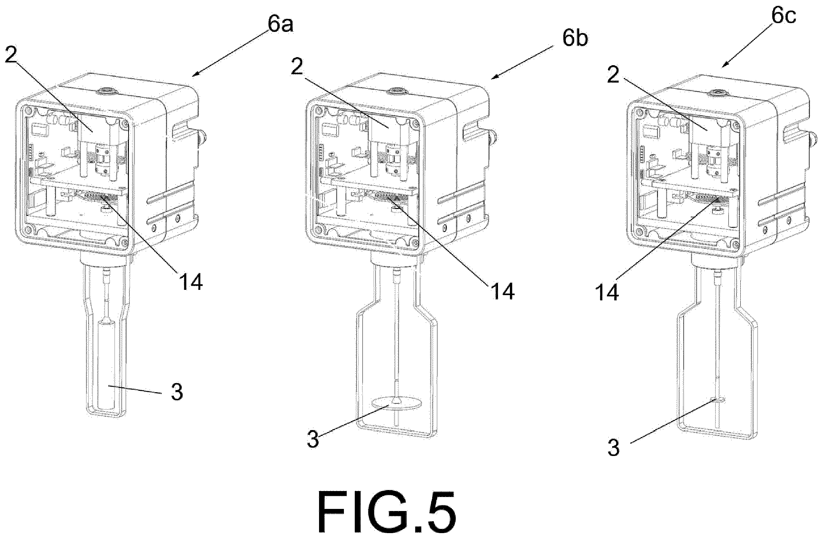

Figure 5 shows three compact measuring units 6a, 6b and 6c that form part of a single measuring equipment and are controlled from the same remote terminal 5. Each of said units 6a, 6b and 6c comprises a measuring head 2 and spindle 3 with a spring 14 tared for a different viscosity range. For example, a low range (20-2,000,000 cP), medium range (100-13,000,000 cP) or high range (200-106,000,000 cP).

As was discussed in the description of the invention, said units 6a, 6b and 6c can be interchangeably coupled from and decoupled from the same framework 7 in order to measure viscosities in different ranges with the same equipment. Thanks to these features, an instrument is obtained that allows a full range of viscosities to be determined with a single equipment, by quickly and easily changing only one compact measuring unit 6a for another 6b that will immediately be recognised by the remote terminal 5 forming part of the equipment..

Although this refers to a concrete embodiment of the invention, it is evident to an expert on the subject that the viscometer 1 described may vary or be modified in numerous ways, and that all the details mentioned may be replaced by other technically equivalent features without departing from the scope of protection defined in the attached claims.

## Claims

1. Rotational viscometer (1) comprising a measuring head (2) attached to a spindle (3) to be immersed in a fluid sample, and a control unit (4), **characterised in that** said control unit (4) comprises:
a. a wireless communication module adapted to receive and/or transmit radiofrequency signals from a smart mobile remote terminal (5) by the user of said viscometer (1), and
b. a processing module associated with said wireless communication module to provide a control signal to said head (2) based on a signal susceptible of coming from a graphic interface on the remote terminal (5),
**in that** said control unit (4) forms part of a measuring unit (6, 6a, 6b, 6c) with no display and keyboard, **and in that** said measuring unit (6, 6a, 6b, 6c) includes a measuring head (2) of a pre-set viscosity range and a spindle (3) attached to said measuring head (2) and is mounted detachably on a framework (7,8) of the viscometer and interchangeable with another measuring unit (6, 6a, 6b, 6c) susceptible of being controlled from said same smart mobile remote terminal (5).

2. A viscometer (1) according to claim 1, wherein said wireless communication module is a Bluetooth communication module.

3. A viscometer (1) according to any of claims 1 to 2, wherein said processing module is associated with said wireless communication module in order to provide a control signal based on a signal from the remote terminal (5), said signal from the remote terminal (5) being indicative of a spindle (3) selection for a predetermined viscosity range, a spindle (3) rotation speed and/or a fluid sample density value.

4. A viscometer (1) according to any of claims 1 to 3, wherein said measuring unit (6, 6a, 6b, 6c) is vertically and movably mounted on the framework (7) which is provided with moving means (10, 11, 12).

5. A viscometer (1) according to claim 4, wherein said framework (7) includes a control unit comprising a wireless communication module adapted to receive and/or transmit signals from said remote terminal (5), and a processing module associated with said wireless communication module in order to provide a control signal to a drive motor (12) of said vertical moving means (10, 11) based on a signal from the remote terminal (5).

6. A viscometer (1) according to claim 5, wherein said vertical moving means comprise a pair of endless belts (10) arranged vertically on vertical structures (9) on the framework (7), and a pair of securing pieces (11) for securing the measuring head (2), said pieces (11) being integrally attached to each of said belts (10) in order to be able to vertically move the head (2) between the two vertical structures (9).

7. A viscometer (1) according to any of claims 5 to 6, wherein said processing module on the framework (7) is associated with said wireless communication module in order to provide a control signal to the drive motor (12) of the vertical moving means (10, 11) based on a signal from the remote terminal (5) indicating a viscosity measurement in a non-flowing fluid sample.

8. An equipment for determining the viscosity of a fluid sample using a viscometer as in claims 1 to 7, comprising a plurality of measuring units (6a, 6b, 6c) with no display and keyboard, each one of said units (6a, 6b, 6c) comprising a measuring head (2) of a pre-set viscosity range (high, medium or low) and each of said measuring units (6a, 6b, 6c) being susceptible of being controlled from the same smart mobile remote terminal (5) and interchangeably coupled from and decoupled from the same framework (7) in order to measure a different viscosity range using the same equipment.

9. An equipment according to claim 8, comprising a smart mobile remote terminal (5) provided with a wireless communication module for receiving and/or transmitting signals to said plurality of measuring units (6a, 6b, 6c), said smart mobile remote terminal (5) including a graphic user interface.

## Patentansprüche

1. Rotationsviskosimeter (1), das einen Messkopf (2), der an einer Spindel (3) befestigt ist, die in eine Fluidprobe eingetaucht werden soll, und eine Steuereinheit (4) aufweist, **dadurch gekennzeichnet, dass** die Steuereinheit (4) folgende Merkmale aufweist:
a. ein Drahtloskommunikationsmodul, das dazu angepasst ist, Hochfrequenzsignale von einem Smartphone-Fernterminal (5) seitens des Nutzers des Viskosimeters (1) zu empfangen und/oder zu senden, und
b. ein Verarbeitungsmodul, das dem Drahtloskommunikationsmodul zugeordnet ist, um dem Kopf (2) auf der Basis eines Signals, das dafür empfänglich ist, von einer graphischen Oberfläche an dem Fernterminal (5) zu kommen, ein Steuersignal bereitzustellen,
dadurch, dass die Steuereinheit (4) einen Bestandteil einer Messeinheit (6, 6a, 6b, 6c) ohne Anzeige und Tastatur bildet und dass die Messeinheit (6, 6a, 6b, 6c) einen Messkopf (2) eines vorab eingestellten Viskositätsbereichs und eine Spindel (3), die an dem Messkopf (2) befestigt ist und abnehmbar an einem Rahmen (7, 8) des Viskosimeters angebracht ist, umfasst und mit einer anderen Messeinheit (6, 6a, 6b, 6c) austauschbar ist, die dafür empfänglich ist, von dem Smartphone-Fernterminal (5) aus gesteuert zu werden.

2. Ein Viskosimeter (1) gemäß Anspruch 1, bei dem das Drahtloskommunikationsmodul ein Bluetooth-Kommunikationsmodul ist.

3. Ein Viskosimeter (1) gemäß einem der Ansprüche 1 bis 2, bei dem das Verarbeitungsmodul dem Drahtloskommunikationsmodul zugeordnet ist, um auf der Basis eines Signals von dem Fernterminal (5) ein Steuersignal bereitzustellen, wobei das Signal von dem Fernterminal (5) eine Wahl einer Spindel (3) für einen vorbestimmten Viskositätsbereich, eine Drehgeschwindigkeit der Spindel (3) und/oder einen Fluidprobendichtewert angibt.

4. Ein Viskosimeter (1) gemäß einem der Ansprüche 1 bis 3, bei dem die Messeinheit (6, 6a, 6b, 6c) vertikal und bewegbar an dem Rahmen (7) angebracht ist, der mit beweglichen Einrichtungen (10, 11, 12) versehen ist.

5. Ein Viskosimeter (1) gemäß Anspruch 4, bei dem der Rahmen (7) eine Steuereinheit umfasst, die ein Drahtloskommunikationsmodul, das dazu angeordnet ist, Signale von dem Fernterminal (5) zu empfangen und/oder zu senden, und ein Verarbeitungsmodul umfasst, das dem Drahtloskommunikationsmodul zugeordnet ist, um auf der Basis eines Signals von dem Fernterminal (5) einem Antriebsmotor (12) der vertikalen beweglichen Einrichtungen (10, 11) ein Steuersignal bereitzustellen.

6. Ein Viskosimeter (1) gemäß Anspruch 5, bei dem die vertikalen beweglichen Einrichtungen ein Paar Endlosriemen (10), die vertikal auf vertikalen Strukturen (9) an dem Rahmen (7) angeordnet sind, und ein Paar Sicherungsstücke (11) zum Sichern des Messkopfs (2) aufweisen, wobei die Stücke (11) einstückig an jedem der Riemen (10) befestigt sind, um in der Lage zu sein, den Kopf (2) zwischen den zwei vertikalen Strukturen (9) vertikal zu bewegen.

7. Ein Viskosimeter (1) gemäß einem der Ansprüche 5 bis 6, bei dem das Verarbeitungsmodul an dem Rahmen (7) dem Drahtloskommunikationsmodul zugeordnet ist, um dem Antriebsmotor (12) der vertikalen beweglichen Einrichtungen (10, 11) auf der Basis eines Signals von dem Fernterminal (5), das eine Viskositätsmessung bei einer nicht-fließenden Fluidprobe angibt, ein Steuersignal bereitzustellen.

8. Eine Ausrüstung zum Bestimmen der Viskosität einer Fluidprobe unter Verwendung eines Viskosimeters gemäß den Ansprüchen 1 bis 7, die eine Mehrzahl von Messeinheiten (6a, 6b, 6c) ohne Anzeige und Tastatur aufweist, wobei jede der Einheiten (6a, 6b, 6c) einen Messkopf (2) eines vorab eingestellten Viskositätsbereichs (hoch, mittel oder niedrig) aufweist und jede der Messeinheiten (6a, 6b, 6c) dafür empfänglich ist, von demselben Smartphone-Fernterminal (5) aus gesteuert zu werden und austauschbar von demselben Rahmen (7) gekoppelt und entkoppelt zu werden, um unter Verwendung derselben Ausrüstung einen anderen Viskositätsbereich zu messen.

9. Eine Ausrüstung gemäß Anspruch 8, die ein Smartphone-Fernterminal (5) aufweist, das mit einem Drahtloskommunikationsmodul zum Empfangen und/oder Senden von Signalen an die Mehrzahl von Messeinheiten (6a, 6b, 6c) versehen ist, wobei das Smartphone-Fernterminal (5) eine graphische Benutzeroberfläche umfasst.

## Revendications

1. Viscosimètre rotatif (1) comprenant une tête de mesure (2) reliée à un axe (3) à immerger dans un échantillon de liquide, et une unité de contrôle (4), **caractérisé en ce que** ladite unité de contrôle (4) comprend :
a. un module de communication sans fil adapté pour la réception et/ou la transmission des signaux de radiofréquence d'un terminal mobile intelligent distant (5) par l'utilisateur dudit viscosimètre (1), et
b. Module de traitement associé audit module de communication sans fil pour fournir un signal de commande à ladite tête (2) basé sur un signal pouvant provenir d'une interface graphique sur le terminal distant (5),
**en ce que** ladite unité de contrôle (4) fait partie d'une unité de mesure (6, 6a, 6b, 6c) sans écran ni clavier, **et en ce que** ladite unité de mesure (6, 6a, 6b, 6c) comprend une tête de mesure (2) d'une plage de viscosité préréglée et un axe (3) relié à ladite tête de mesure (2) et est montée de façon détachable sur un châssis (7,8) du viscosimètre et interchangeable avec une autre unité de mesure (6, 6a, 6b, 6c) pouvant être contrôlée à partir dudit même terminal mobile intelligent distant (5).

2. Viscosimètre (1) selon la revendication 1, dans lequel ledit module de communication sans fil est un module de communication Bluetooth.

3. Viscosimètre (1) selon une quelconque des revendications 1 à 2, dans lequel ledit module de traitement est associé audit module de communication sans fil afin de fournir un signal de commande basé sur un signal du terminal distant (5), ledit signal du terminal distant (5) indiquant le choix d'un axe (3) pour une plage prédéterminée de viscosité, une vitesse de rotation de l'axe (3) et/ou une valeur de densité de l'échantillon de liquide.

4. Viscosimètre (1) selon une quelconque des revendications 1 à 3, dans lequel ladite unité de mesure (6, 6a, 6b, 6c) est montée verticalement et de façon mobile sur le châssis (7) qui est doté de moyens de déplacement (10, 11, 12).

5. Viscosimètre (1) selon la revendication 4, dans lequel ledit châssis (7) comprend une unité de contrôle comprenant un module de communication sans fil adapté pour recevoir et/ou transmettre des signaux dudit terminal distant (5), et un module de traitement associé audit module de communication sans fil afin de fournir un signal de commande à un moteur d'entraînement (12) desdits moyens de déplacement vertical (10, 11) basé sur un signal du terminal distant (5).

6. Viscosimètre (1) selon la revendication 5, dans lequel lesdits moyens de déplacement vertical comprennent une paire de courroies sans fin (10) disposées verticalement sur des structures verticales (9) sur le châssis (7), et une paire de pièces de fixation (11) pour fixer la tête de mesure (2), lesdites pièces (11) étant intégralement liées à chacune desdites courroies (10) afin de pouvoir déplacer la tête verticalement (2) entre les deux structures verticales (9).

7. Viscosimètre (1) selon une quelconque des revendications 5 à 6, dans lequel ledit module de traitement sur le châssis (7) est associé audit module de communication sans fil afin de fournir un signal de commande au moteur d'entraînement (12) des moyens de déplacement vertical (10, 11) basé sur un signal du terminal distant (5) indiquant une mesure de viscosité dans un échantillon de liquide sans écoulement.

8. Équipement pour déterminer la viscosité d'un échantillon de liquide utilisant un viscosimètre selon les revendications 1 à 7, comprenant une pluralité d'unités de mesure (6a, 6b, 6c) sans écran ni clavier, chacune desdites unités de mesure (6a, 6b, 6c) comprenant une tête de mesure (2) d'une plage préréglée de viscosité (haute, moyenne ou basse) et chacune desdites unités de mesure (6a, 6b, 6c) pouvant être contrôlée à partir du même terminal mobile intelligent distant (5) et couplée et découplée de manière interchangeable du même châssis (7) afin de mesurer une plage de viscosité différente en utilisant le même équipement.

9. Équipement selon la revendication 8, comprenant un terminal mobile intelligent distant (5) muni d'un module de communication sans fil pour recevoir et/ou transmettre les signaux d'une pluralité desdites unités de mesure (6a, 6b, 6c), ledit terminal mobile intelligent distant (5) comprenant une interface graphique utilisateur.
